# EUROPEAN PATENT APPLICATION

(11) **EP 4 485 646 A1**
(43) Date of publication of application: **01.01.2025**
(21) Application number: 22962479.6
(22) Date of filing: 21.10.2022
(51) Int. Cl.: H01M 50/204, H01M 50/291, H01M 50/258

(54) **BATTERY AND ELECTRIC DEVICE**

(71) Applicant: Contemporary Amperex Technology Co., Limited, Ningde, Fujian 352100 (CN)
(72) Inventor: LIN, Xinwei, Ningde, Fujian 352100 (CN); LI, Lingyu, Ningde, Fujian 352100 (CN)
(74) Representative: Behr, Wolfgang
(86) International application number: PCT/CN2022/126810
(87) International publication number: WO 2024/082297

(57) **Abstract**

A battery (100) and an electrical device are provided, belonging to the field of battery technology. The battery (100) includes a box (10), a first battery cell group (201), a second battery cell group (202), a separation beam (30), a connection member (40) and a fixed base (50), wherein the first battery cell group (201) and the second battery cell group (202) are provided in the box (10) and arranged in the first direction; the separation beam (30) is provided between the first battery cell group (201) and the second battery cell group (202); the first battery cell group (201) and the second battery cell group (202) are electrically connected by the connection member (40); and the fixed base (50) is provided on the separation beam (30), wherein the connection member (40) is fixed to the fixed base. The battery (100) has relatively high safety.

## Description

### Technical Field

The present application relates to the field of battery technology, and specifically, to a battery and an electrical device.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery technology is an important factor related to their development.

In the development of battery technology, in addition to improving battery safety, energy density is also an issue that cannot be ignored. Therefore, how to improve the energy density of the battery is an urgent technical problem that needs to be solved in battery technology.

### Summary

An object of the present application is to provide a battery and an electrical device, which battery has relatively high safety.

The present application is realized through the following technical solutions.

In a first aspect, the present application provides a battery, which includes a box, a first battery cell group, a second battery cell group, a separation beam, a connection member and a fixed base, wherein the first battery cell group and the second battery cell group are provided in the box and arranged in the first direction; the separation beam is provided between the first battery cell group and the second battery cell group; the first battery cell group and the second battery cell group are connected by the connection member; the fixed base is provided on the separation beam, wherein the connection member is fixed to the fixed base.

In the battery according to the embodiments of the present application, the connection member is fixed to the fixed base, and the fixed base is provided on the separation beam, so that the movement of the connection member is constrained by the fixed base, which improves the connection reliability of the connection member and the battery cell groups and reduces the risk of damage of the joint between the connection member and the battery cell group caused by the movement of the connection member, and further enables the relatively high safety of the battery.

According to some embodiments of the present application, the fixed base includes a first installation groove, and a part of the connection member is provided in the first installation groove.

In the above solution, a part of the connection member is provided in the first installation groove, facilitating the fixed base constraining the movement of the connection member.

According to some embodiments of the present application, the first installation groove includes a first groove side surface and a second groove side surface arranged oppositely, and a part of the connection member is sandwiched between the first groove side surface and the second groove side surface.

In the above solution, a part of the connection member is sandwiched between the first groove side surface and the second groove side surface, such that the movement of the connection member is limited by the first groove side surface and the second groove side surface, thus enabling reliable connection of the connection member with the first battery cell group and the second battery cell group.

According to some embodiments of the present application, at least one of the first groove side surface and the second groove side surface is provided with a protrusion, and the protrusion abuts against the connection member.

In the above solution, the protrusion abuts against the connection member, to increase the difficulty of the connection member moving relative to the fixed base.

According to some embodiments of the present application, the first installation groove further includes a first groove bottom surface, the first groove bottom surface is connected with the first groove side surface and the second groove side surface, and the first groove bottom surface supports the connection member.

In the above solution, the first groove bottom surface, the first groove side surface and the second groove side surface jointly constrain the connection member, and the connection member cooperates with the fixed base stably, making it difficult for the connection member to move relative to the fixed base, thereby enabling relatively reliable connection of the connection member with the first battery cell group and the second battery cell group.

According to some embodiments of the present application, in a direction away from the first groove bottom surface, the connection member does not exceed an end of the first groove side surface away from the first groove bottom surface, and/or the connection member does not exceed an end of the second groove side surface away from the first groove bottom surface.

In the above solution, when the connection member does not exceed an end of the first groove side surface away from the first groove bottom surface, the first groove side surface has a better shielding effect on the connection member, reducing the risk of short circuit caused by contact between the connection member and other components; when the connection member does not exceed an end of the second groove side surface away from the first groove bottom surface, the second groove side surface has a better shielding effect on the connection member, reducing the risk of short circuit caused by contact between the connection member and other components; and when the connection member does not exceed the end of the first groove side surface away from the first groove bottom surface and the end of the second groove side surface away from the first groove bottom surface, the connection member is shielded by the first groove side surface and the second groove side surface, and the first groove side surface and the second groove side surface have protection effects on the connection member, reducing the risk of short circuit caused by contact between the connection member and other components.

According to some embodiments of the present application, the first groove side surface and the second groove side surface are provided oppositely in a second direction, and the second direction intersects the first direction.

In the above solution, the first groove side surface and the second groove side surface limit the movement of the connection member in the second direction, so that the connection member is stably connected to the first battery cell group and the second battery cell group, reducing the risk of damage of the joint of the connection member and the first battery cell group and the joint of the connection member and the second battery cell group.

According to some embodiments of the present application, the fixed base includes a second installation groove, the second installation groove includes a third groove side surface and a fourth groove side surface arranged oppositely in the first direction, and at least a part of the separation beam is sandwiched between the third groove side surface and the fourth groove side surface.

In the above solution, the second installation groove is used to accommodate the separation beam, and at least a part of the separation beam is clamped by the third groove side surface and the fourth groove side surface, to facilitate the assembly of the fixed base and the separation beam, so that the fixed base is connected stably to the separation beam.

According to some embodiments of the present application, the inner surface of the second installation groove is bonded to the outer surface of the separation beam.

In the above solution, the inner surface of the second installation groove is bonded to the outer surface of the separation beam, so that the fixed base is firmly connected to the separation beam, reducing the risk of the fixed base moving relative to the separation beam.

According to some embodiments of the present application, the box includes a box bottom wall and a box side wall. The box side wall surrounds the box bottom wall. The separation beam is provided on the box bottom wall. The separation beam extends in the second direction. Any two of the second direction, the first direction and the thickness direction of the box bottom wall intersects each other.

In the above solution, the separation beam is provided on the box bottom wall, facilitating the connection between the separation beam and the box, and the separation beam extends in the second direction, such that the separation beam has a large shielding area for the first battery cell group and the second battery cell group, facilitating the separation beam separating the first battery cell group from the second battery cell group, and thereby reducing the risk of short circuit caused by contact between the first battery cell group and the second battery cell group.

According to some embodiments of the present application, the separation beam includes a top surface away from the box bottom wall, the separation beam is provided with a first concave part recessed from the top surface toward the box bottom wall, and at least part of the fixed base is provided in the concave part.

In the above solution, the first concave part provides a space for accommodating the fixed base, and at least part of the fixed base is provided in the first concave part, which can reduce the space occupied by the fixed base in the thickness direction of the box bottom wall after being assembled with the separation beam, and reduce the influence of the fixed base on the space utilization rate inside the box, and enable the battery to have a higher energy density.

According to some embodiments of the present application, the battery further includes an insulation member, and the insulation member is connected to the separation beam to isolate the separation beam from the first battery cell group and isolate the separation beam from the second battery cell group, and the fixed base is connected to the insulation member.

In the above solution, the insulation member is connected to the separation beam, and the insulation member and the separation beam have a large connection area, thereby facilitating the isolation from the first battery cell group and the second battery cell group, and reducing the risk of short circuit caused by contact between the first battery cell group and the second battery cell group.

According to some embodiments of the present application, the insulation member includes a first side wall and a second side wall, and the first side wall and the second side wall are respectively provided at two sides of the separation beam in the first direction.

In the above solution, the first side wall and the second side wall are respectively provided at two sides of the separation beam in the first direction, which facilitates the assembly of the insulation member and the separation beam, and enables better insulation effect between the first battery cell group and the second battery cell group.

According to some embodiments of the present application, the insulation member further includes a connection wall, which is provided at a side of the separation beam away from the box bottom wall, and the connection wall connects the first side wall and the second side wall.

In the above solution, the connection wall connects the first side wall and the second side wall, increasing the strength of the insulation member and facilitating the connection between the insulation member and the separation beam.

According to some embodiments of the present application, the fixed base and the insulation member are integrally formed.

In the above solution, the fixed base and the insulation member are integrally formed, so that the fixed base is firmly connected to the insulation member are, facilitating processing and manufacturing.

According to some embodiments of the present application, the fixed base is located at one end of the insulation member in the second direction.

In the above solution, the fixed base and the insulation member are arranged in the second direction, and the arrangement direction of the fixed base and the insulation member is parallel to the extension direction of the separation beam. On the one hand, it is convenient for each of the fixed base and the insulation member to have a larger connection area with the separation beam, and on the other hand, it reasonably utilizes the space in the extension direction of the separation beam to improve the space utilization rate in the box, enabling the battery to have a higher energy density.

According to some embodiments of the present application, both the first battery cell group and the second battery cell group include a plurality of battery cells stacked in the first direction.

In the above solution, the plurality of battery cells in the first battery cell group and the second battery cell group are stacked in the first direction, so as to on the one hand, facilitate realizing the electrical connection between the first battery cell group and the second battery cell group, and on the other hand, enable higher space utilization rate of the box in the first direction.

According to some embodiments of the present application, the battery cell includes a housing and an electrode terminal. The housing has a first wall perpendicular to the first direction, the electrode terminal is installed on the first wall, the electrode terminal has a first surface, and the plane where the first surface is located intersects the first wall. One end of the connection member is connected to the first surface of the electrode terminal of one battery cell in the first battery cell group closest to the separation beam, and the other end of the connection member is connected to the first surface of the electrode terminal of one battery cell in the second battery cell group closest to the separation beam.

In the above solution, the electrode terminal is provided on the first wall of the housing perpendicular to the first direction, so as to facilitate the connection between the plurality of battery cells, and the connection of the first battery cell group and the second battery cell group with the connection member.

According to some embodiments of the present application, the connection member includes a base wall, two end walls and two flanging parts. The two end walls are arranged oppositely in the first direction. The base wall connects the two end walls. Each flanging part extends from one end of the corresponding end wall away from the base wall in a direction away from the other end wall, and one of the flanging parts is connected to the first surface of the electrode terminal of one battery cell in the first battery cell group closest to the separation beam, and the other flanging part is connected to the first surface of the electrode terminal of one battery cell in the second battery cell group closest to the separation beam.

In the above solution, the structural form of the connection member makes the connection member have high strength, and the flanging part is connected to the first surface of the electrode terminal, which can reduce the space occupied in the first direction and improve the space utilization rate of the box in the first direction.

According to some embodiments of the present application, the fixed base includes a first installation groove, the first installation groove includes a first groove side surface and a second groove side surface arranged oppositely, and the base wall is sandwiched between the first groove side surface and the second groove side surface.

In the above solution, the base wall is sandwiched between the first groove side surface and the second groove side surface, such that the movement of the base wall is limited by the first groove side surface and the second groove side surface, thus enabling reliable connection of the connection member with the first battery cell group and the second battery cell group.

According to some embodiments of the present application, the base wall includes a second surface and a third surface disposed oppositely, two end walls protrude out from the second surface, the first groove side surface is provided opposite to the second surface, and the second groove side surface is provided opposite to the third surface. The dimension of the projection of the first groove side surface on the second surface in the first direction is L1, and the dimension of the projection of the second groove side surface on the third surface in the first direction is L2, satisfying: L1 < L2.

In the above solution, the base wall and the second groove side surface have a large overlapping area, so that the fixed base has a better constraining effect on the connection member; and at the same time, the two end walls protrude out from the second surface, and the first groove side surface is provided opposite to the second surface to reduce the risk of assembly interference between the fixed base and the connection member.

According to some embodiments of the present application, the first walls of the battery cells of the first battery cell group are provided facing the separation beam, and the first walls of the battery cells of the second battery cell group are provided facing away from the separation beam.

In the above solution, the plurality of battery cells in the first battery cell group are arranged in the same manner as the plurality of battery cells in the second battery cell group, which facilitates cooperation between the box, and the first battery cell group and the second battery cell.

According to some embodiments of the present application, the fixed base includes a third installation groove, and a part of the electrode terminal of the battery cell of the first battery cell group closest to the separation beam is located in the third installation groove.

In the above solution, a part of the electrode terminal of the battery cell of the first battery cell group closest to the separation beam is located in the third installation groove, reducing the space occupied in the first direction by the structure after the connection member is connected to the electrode terminal, reasonably utilizing the internal space of the box, and enabling the battery to have higher energy density.

According to some embodiments of the present application, the housing includes a first wall and a second wall oppositely provided in a first direction, a third wall and a fourth wall oppositely provided in a second direction, and a fifth wall and a sixth wall oppositely provided in a third direction. The area of the third wall and the area of the fourth wall are both smaller than the area of the first wall, the area of the third wall and the area of the fourth wall are both smaller than the area of the second wall, the areas of the fifth wall and the sixth wall are both smaller than the area of the first wall, the areas of the fifth wall and the sixth wall are both smaller than the area of the second wall, and any two of the first direction, the second direction and the third direction intersect each other.

In the above solution, the first wall and the second wall are walls of the housing with larger areas, and the plurality of battery cells are stacked in the first direction perpendicular to the first wall, so that the first battery cell group and the second battery cell group have compact structures, enabling the battery to have higher energy density.

According to some embodiments of the present application, the housing further has a second wall disposed opposite to the first wall, wherein a first region of an edge of the second wall is recessed to form a second concave part, and the second concave part is used to accommodate the electrode terminal of the battery cell adjacent to the second wall.

In the above solution, the arrangement of the second concave part enables accommodation of the electrode terminal of the battery cell adjacent to the second wall, making the battery cell group have compact structure and thus enabling the battery to have higher energy density.

In a second aspect, the present application further provides an electrical device, including at least one battery provided in any of the above embodiments.

The above description is only an overview of the technical solutions of the present application. In order to have a clearer understanding of the technical means of the present application so that they can be implemented according to the content of the description, and in order to make the above and other purposes, features and advantages of the present application more obvious and understandable, the embodiments of the present application are specifically listed below.

### Brief Description of Drawings

In order to illustrate the technical solutions of the embodiments of the present application more clearly, the drawings required to be used in the embodiments of the present application will be briefly introduced below. Obviously, the drawings described below are only some embodiments of the present application. Those of ordinary skill in the art can also obtain other drawings based on the drawings without paying creative efforts.
FIG. 1 is a schematic structural diagram of a vehicle provided by some embodiments of the present application;
FIG. 2 is an exploded view of a battery provided by some embodiments of the present application;
FIG. 3 is a schematic structural diagram of a battery provided by some embodiments of the present application;
FIG. 4 is a local schematic diagram of a battery provided by some embodiments of the present application;
FIG. 5 is a partial structural schematic diagram of a battery provided by some embodiments of the present application;
FIG. 6 is a schematic structural diagram of a fixed base provided by some embodiments of the present application;
FIG. 7 is a schematic diagram showing cooperation between a connection member and an installation groove provided by some embodiments of the present application;
FIG. 8 is a sectional view of a partial structure of a battery provided by some embodiments of the present application;
FIG. 9 is a partial structural schematic diagram of a battery provided by some embodiments of the present application;
FIG. 10 is a schematic structural diagram of a fixed base, an insulation member and a bus member provided by some embodiments of the present application;
FIG. 11 is a local enlarged view of part A of FIG. 10;
FIG. 12 is a partial structural schematic diagram of a battery provided by some embodiments of the present application; and
FIG. 13 is a schematic diagram showing cooperation between an electrode terminal and a first wall provided by some embodiments of the present application.

In the drawings, the drawings are not drawn to actual scale.

Reference signs: 100-battery; 10-box; 11-first sub-box; 111-box bottom wall; 112-box side wall; 12-second sub-box; 201-first battery cell group; 202- second battery cell group; 21-battery cell; 211-housing; 2111-first wall; 2112-second wall; 2113-second concave part; 212-electrode terminal; 2121-first surface; 30-separation beam; 31-top surface; 32-first concave part; 40-connection member; 41-base wall; 411-second surface; 412-third surface; 42-end wall; 43-flanging part; 50-fixed base; 51-first installation groove; 511-first groove side surface; 512-second groove side surface; 513-protrusion; 514-first groove bottom surface; 52-second installation groove; 521-third groove side surface; 522-fourth groove side surface; 53-third installation groove; 60-insulation member; 61-first side wall; 62-second side wall; 63-connection wall; 200-controller; 300-motor; 1000-vehicle.

### Detailed Description of Embodiments

The embodiments of the present application will be described in further detail below with reference to the drawings and examples. The detailed description of the following examples and the drawings are used to illustrate the principles of the present application, but cannot be used to limit the scope of the present application, that is, the present application is not limited to the described examples.

Unless otherwise defined, all technical and scientific terms used herein have the same meanings as commonly understood by those skilled in the prior art of the present application; the terms used herein are for the purpose of describing specific examples only and are not intended to limit the present application; the terms "including" and "having" and any variations thereof in the description and claims of the present application and the above description of the drawings are intended to cover non-exclusive inclusion.

The terms "first", "second", etc. in the description and claims of the present application or the above-mentioned drawings are used to distinguish different objects, rather than to describe a specific order or priority relationship

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In the description of the present application, it should be indicated that unless otherwise clearly specified and limited, terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the description of the embodiments of the present application, "plurality/multiple" means two or more (including two). Similarly, "a plurality of/multiple groups" means two or more groups (including two groups), and ""a plurality of/multiple pieces" means two or more pieces (including two pieces).

For the development of battery technology, many design factors need to be considered at the same time, for example, performance parameters such as energy density, discharge capacity, and charge-discharge rate. In addition, assembly efficiency of the battery also needs to be considered.

The battery cell group includes a plurality of battery cells that are stacked and electrically connected. It has a compact structure and occupies a small assembly space.

The battery includes a box, a separation beam and at least one battery cell group. The separation beam and the at least one battery cell group are arranged in the box. The separation beam divides the internal space of the box into multiple spaces, and the at least one battery cell group and other components (such as wire harness) are provided in the multiple spaces respectively. In some embodiments, two sides of the separation beam are each provided with a battery cell group. The two battery cell groups are electrically connected through a connection member. The connection member is usually suspended in the air. That is, the connection member is located above the separation beam. The two ends of the connection member are connected to the two battery cell groups respectively. In this case, the connection member is only connected to the two battery cell groups. The connection reliability between the connection member and the battery cell group is poor, and when the battery is vibrated, the joint of the connection member and the battery cell group is easily damaged, causing safety risk.

In view of this, in order to solve the problem of poor safety of the battery caused by poor connection reliability between the connection member and the battery cell group, the inventors have designed a technical solution after in-depth researches, which improves the safety of the battery by fixing the connection member to a fixed base to constrain the movement of the connection member, and reduce the risk of damage of the joint of the connection member and the battery cell group caused by the movement of the connection member.

In such a battery, the fixed base is provided on the separation beam, and the connection member is fixed to the fixed base. The connection member is stably assembled with the separation beam. When the battery is vibrated, the connection member can be constrained by the fixed base, and it is difficult for the connection member to move relative to the separation beam, which can reduce the risk of damage of the joint of the connection member and the battery cell group, and enable the battery to have higher safety.

The battery disclosed in the embodiments of the present application can be used in, but is not limited to, vehicles, ships, aircraft or other electrical devices. The battery disclosed in the present application can be used to form a power supply system for the electrical device.

Embodiments of the present application provide an electrical device using the battery as the power supply. The electrical device may be, but not limited to a mobile phone, a panel computer, a notebook computer, an electric toy, an electric tool, an electric bicycle, an electric motorcycle, an electric vehicle, a ship, a spacecraft or the like. In the above, the electric toy may include a fixed or mobile electric toy, such as a game console, an electric car toy, an electric ship toy, or an electric aircraft toy. The spacecraft includes an airplane, a rocket, a space shuttle, a spaceship, or the like.

For convenient description, the following embodiments are described by taking a vehicle 1000 as an electrical device as example.

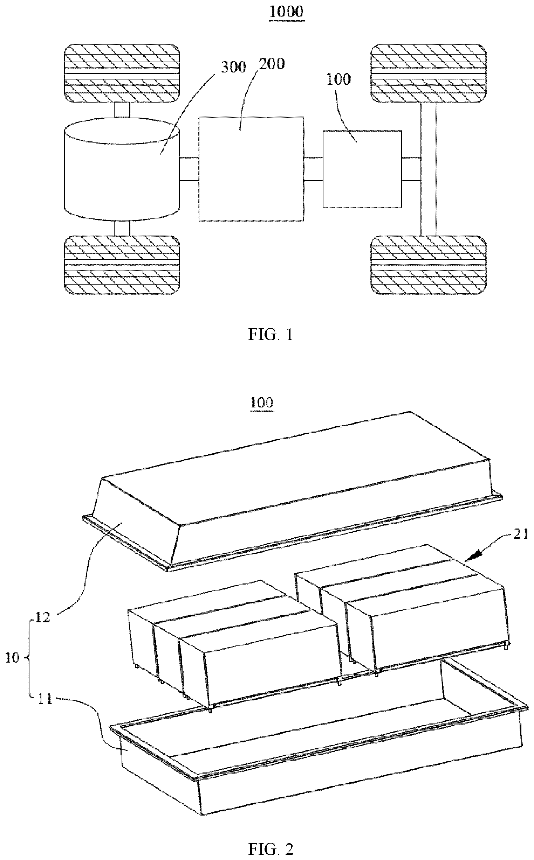

Referring to FIG. 1, FIG. 1 is a schematic structural diagram of a vehicle provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000, for circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery provided by some embodiments of the present application. The battery 100 includes a box 10 and battery cells 21, and the battery cells 21 are accommodated in the box 10.

In the above, the box 10 is used to provide an accommodation space for the battery cells 21, and the box 10 may be in a variety of structures. In some embodiments, the box 10 may include a first sub-box 11 and a second sub-box 12. The first sub-box 11 and the second sub-box 12 cover each other. The first sub-box 11 and the second sub-box 12 jointly define an accommodation space for accommodating the battery cells 21. The first sub-box 11 may be in a hollow structure with one side open, and the second sub-box 12 may be in a plate-like structure. The second sub-box 12 covers the open side of the second sub-box 12, so that the first sub-box 11 and the second sub-box 12 jointly define an accommodation space; and the first sub-box 11 and the second sub-box 12 may also be both in a hollow structure with one side open, and the open side of the first sub-box 11 covers the open side of the second sub-box 12.

In the battery 100, there may be multiple battery cells 21, and the multiple battery cells 21 may be in serial, parallel or hybrid connection with each other. The hybrid connection means that the multiple battery cells 21 are connected with each other both in series and in parallel. The battery 100 may further include other structures. For example, the battery 100 may further include a bus component for realizing electrical connection between the multiple battery cells 21.

In the above, the battery cell 21 may be a secondary battery or a primary battery; and the battery cell 21 may also be a lithium-sulfur battery, a sodium-ion battery or a magnesium-ion battery, but is not limited thereto.

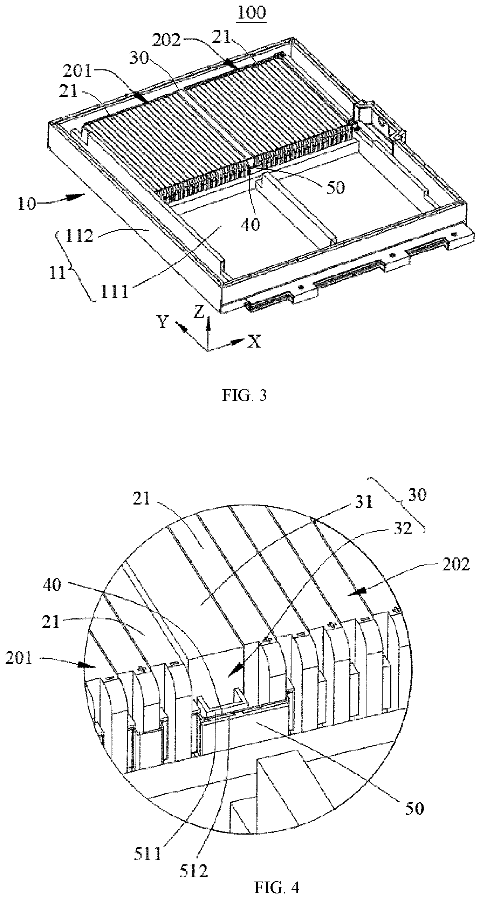

Referring to FIG. 3 and FIG. 4, FIG. 3 is a schematic structural diagram of a battery provided by some embodiments of the present application, and for convenient description, FIG. 3 does not show the second sub-box; and FIG. 4 is a local schematic diagram of a battery provided by some embodiments of the present application. According to some embodiments of the present application, the present application provides a battery 100. The battery 100 includes a box 10, a first battery cell group 201, a second battery cell group 202, a separation beam 30, a connection member 40 and a fixed base 50. The first battery cell group 201 and the second battery cell group 202 are provided in the box 10 and arranged in the first direction X; the separation beam 30 is provided between the first battery cell group 201 and the second battery cell group 202; the first battery cell group 201 and the second battery cell group 202 are electrically connected by the connection member 40; and the fixed base 50 is provided on the separation beam 30, wherein the connection member 40 is fixed to the fixed base 50.

The box 10 is used to provide an accommodation space. The first battery cell group 201 and the second battery cell group 202 are provided in the accommodation space, and the box 10 plays a protective role.

The first battery cell group 201 includes a plurality of battery cells 21 which are stacked. The second battery cell group 202 includes a plurality of battery cells 21 which are stacked. The number of the battery cells 21 in the first battery cell group 201 and the number of the battery cells 21 in the second battery cell group 202 may be same or different. The structural form of the battery cells 21 in the first battery cell group 201 and the structural form of the battery cells 21 in the second battery cell group 202 may be same or different.

The first battery cell group 201, the separation beam 30 and the second battery cell group 202 are arranged in the accommodation space of the box 10 in the first direction X. The separation beam 30 separates the first battery cell group 201 from the second battery cell 202.

The separation beam 30 is a component disposed inside the box 10. The separation beam 30 is used to divide the interior of the box 10 into multiple spaces. The multiple spaces can respectively accommodate the battery cell groups and other components (such as wire harness). At the same time, the separation beam 30 is disposed in the box 10, which can also improve the overall strength of the box 10.

The material of the separation beam 30 may be the same as the material of the box 10, or may be different from the material of the box 10. The separation beam 30 may be made of a material of aluminum, aluminum alloy, stainless steel, etc., and has high strength.

The fixed base 50 is a component for fixing the connection member 40. The fixed base 50 and the separation beam 30 may be connected in various ways. For example, the fixed base 50 may be connected to the separation beam 30 by means of snap-fitting, bonding, riveting, etc. The fixed base 50 may also be connected to the separation beam 30 through a fastener (such as bolt, etc.).

The connection member 40 is a component used to electrically connect the first battery cell group 201 and the second battery cell group 202. The material of the connection member 40 may be aluminum, copper, or the like.

That the connection member 40 is fixed to the fixed base 50 means that the movement of the connection member 40 is constrained by the fixed base 50. For example, the connection member 40 and the fixed base 50 are relatively fixed in position, and the connection member 40 does not move relative to the fixed base 50, or there is a large friction force between the connection member 40 and the fixed base 50, and it is difficult for the connection member 40 to move relative to the fixed base 50. Optionally, the connection member 40 is fixed to the fixed base 50 through bolt(s), or the connection member 40 is snap-fitted with the fixed base 50.

In the battery 100 according to the embodiments of the present application, the connection member 40 is fixed to the fixed base 50, and the fixed base 50 is provided on the separation beam 30, so that the movement of the connection member 40 is constrained by the fixed base 50, which improves the connection reliability of the connection member 40 and the battery cell group (collective name of the first battery cell group 201 and second battery cell group 202, same below) and reduces the risk of damage of the joint of the connection member 40 and the battery cell group caused by the movement of the connection member 40, and further enables the battery to have relatively high safety.

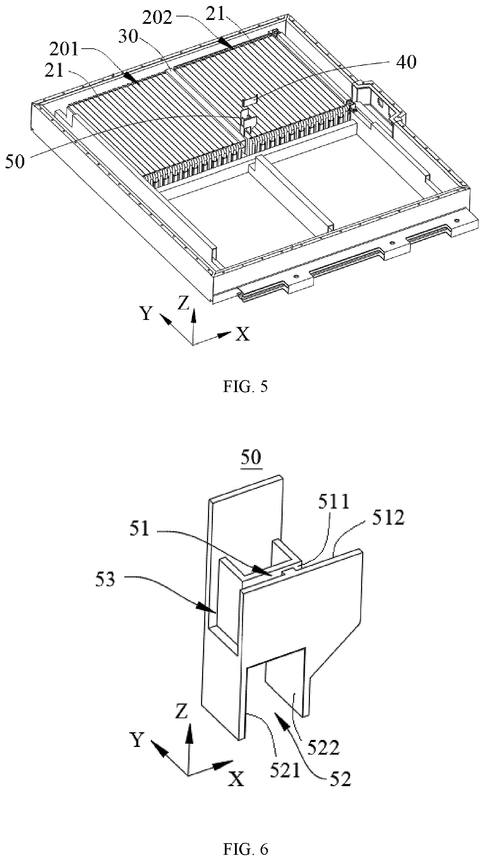

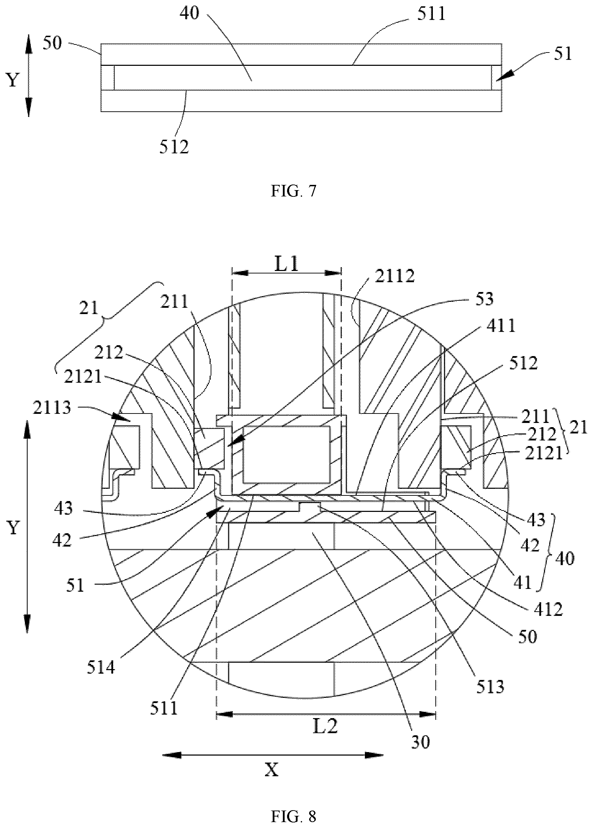

Referring to FIG. 5 to FIG. 7, FIG. 5 is a partial structural schematic diagram of a battery provided by some embodiments of the present application; FIG. 6 is a schematic structural diagram of a fixed base provided by some embodiments of the present application; and FIG. 7 is a schematic diagram showing cooperation between a connection member and an installation groove provided by some embodiments of the present application. According to some embodiments of the present application, the fixed base 50 includes a first installation groove 51, and a part of the connection member 40 is provided in the first installation groove 51.

The first installation groove 51 is a groove of the fixed base 50 for accommodating the connection member 40. The first installation groove 51 provides an accommodation space for the connection member 40, so that a part of the connection member 40 may be provided in the first installation groove 51.

In the above solution, a part of the connection member 40 is provided in the first installation groove 51, facilitating the fixed base 50 constraining the movement of the connection member 40.

Referring to FIG. 6 and FIG. 7, according to some embodiments of the present application, the first installation groove 51 includes a first groove side surface 511 and a second groove side surface 512 arranged oppositely, and a part of the connection member 40 is sandwiched between the first groove side surface 511 and the second groove side surface 522.

The first groove side surface 511 and the second groove side surface 512 are two surfaces enclosing the first installation groove 51. The first groove side surface 511 and the second groove side surface 512 may be parallel to the extension direction of the first installation groove 51.

The first groove side surface 511 and the second groove side surface 512 may be planes (horizontal surfaces), and the first groove side surface 511 and the second groove side surface 512 may be provided parallel to the connection member 40, so that the first groove side surface 511 and the second groove side surface 512 have a larger contact area.

A part of the connection member 40 is sandwiched between the first groove side surface 511 and the second groove side surface 512. The first groove side surface 511 and the second groove side surface 512 apply force on the connection member 40 respectively, so that the part of the connection member 40 located between the first groove side surface 511 and the second groove side surface 512 is clamped by the first groove side surface 511 and the second groove side surface 512.

In the above solution, a part of the connection member 40 is clamped by the first groove side surface 511 and the second groove side surface 512, such that the movement of the connection member 40 is limited by the first groove side surface 511 and the second groove side surface 512, making it difficult for the connection member 40 to move relative to the fixed base 50, and thus enabling reliable connection of the connection member 40 with the first battery cell group 201 and the second battery cell group 202.

During the assembly process of the battery 100, the position of the connection member 40 may be determined first, and after the connection member 40 is fixed to the fixed base 50, the connection member 40 may be connected to the first battery cell group 201 and the second battery cell group 202 again, to ensure the connection accuracy between the connection member 40 and the first battery cell group 201 and the second battery cell group 202.

Referring to FIG. 8, FIG. 8 is a sectional view of a partial structure of a battery provided by some embodiments of the present application, and FIG. 8 shows a cooperation state of the connection member and the first installation groove. According to some embodiments of the present application, at least one of the first groove side surface 511 and the second groove side surface 512 is provided with a protrusion 513, and the protrusion 513 abuts against the connection member 40.

When the first groove side surface 511 is provided with a protrusion 513, the protrusion 513 is a protruding portion provided on the first groove side surface 511. The protrusion 513 protrudes toward the second groove side surface 512 and abuts against the connection member 40, so that the side of the connection member 40 facing away from the first groove side surface 511 can be fitted with the second groove side surface 512.

As shown in FIG. 8, when the second groove side surface 512 is provided with a protrusion 513, the protrusion 513 is a protruding portion provided on the second groove side surface 512. The protrusion 513 protrudes toward the first groove side surface 511 and abuts against the connection member 40, so that the side of the connection member 40 facing away from the second groove side surface 512 can be fitted with the first groove side surface 511.

When the first groove side surface 511 and the second groove side surface 512 are each provided with a protrusion 513, the protrusion 513 located on the first groove side surface 511 protrudes toward the second groove side surface 512, and the protrusion 513 located on the second groove side surface 512 protrudes toward the first groove side surface 511, and the protrusions 513 abut against the connection member 40 at the two opposite sides of the connection member 40.

The protrusion 513 abuts against the connection member 40, and there is a large friction force between the connection member 40 and the fixed base 50. The fixed base 50 has a good clamping effect on the connection member 40.

In the above solution, the protrusion 513 abuts against the connection member 40, to increase the difficulty of the connection member 40 moving relative to the fixed base 50.

Referring to FIG. 8, according to some embodiments of the present application, the first installation groove 51 further includes a first groove bottom surface 514, the first groove bottom surface 514 is connected with the first groove side surface 511 and the second groove side surface 512, and the first groove bottom surface 514 supports the connection member 40.

The first groove bottom surface 514, the first groove side surface 511, and the second groove side surface 512 together form the first installation groove 51. The connection member 40 is placed on the first groove bottom surface 514, and the first groove bottom surface 514 supports the connection member 40.

In the above solution, the first groove bottom surface 514, the first groove side surface 511 and the second groove side surface 512 jointly constrain the connection member 40, and the connection member 40 cooperates with the fixed base 50 stably, making it difficult for the connection member 40 to move relative to the fixed base 50, thereby enabling relatively reliable connection of the connection member 40 with the first battery cell group 201 and the second battery cell group 202.

Referring to FIG. 4, according to some embodiments of the present application, in a direction away from the first groove bottom surface 514, the connection member 40 does not exceed an end of the first groove side surface 511 away from the first groove bottom surface 514, and/or the connection member 40 does not exceed an end of the second groove side surface 512 away from the first groove bottom surface 514.

In the direction away from the first groove bottom surface 514, the connection member 40 is assembled with the first groove side surface 511 and the second groove side surface 512 in different ways. For example, the connection member 40 does not exceed an end of the first groove side surface 511 away from the first groove bottom surface 514, or the connection member 40 does not exceed an end of the second groove side surface 512 away from the first groove bottom surface 514, or the connection member 40 does not exceed the end of the first groove side surface 511 away from the first groove bottom surface 514 and the end of the second groove side surface 512 away from the first groove bottom surface 514.

In the above solution, when the connection member 40 does not exceed the end of the first groove side surface 511 away from the first groove bottom surface 514, the first groove side surface 511 has a better shielding effect on the connection member 40, reducing the risk of short circuit caused by contact between the connection member 40 and other components; when the connection member 40 does not exceed the end of the second groove side surface 512 away from the first groove bottom surface 514, the second groove side surface 512 has a better shielding effect on the connection member 40, reducing the risk of short circuit caused by contact between the connection member 40 and other components; and when the connection member 40 does not exceed the end of the first groove side surface 511 away from the first groove bottom surface 514 and the end of the second groove side surface 512 away from the first groove bottom surface 514, the connection member 40 is shielded by the first groove side surface 511 and the second groove side surface 512, and the first groove side surface 511 and the second groove side surface 512 have protection effects on the connection member 40, reducing the risk of short circuit caused by contact between the connection member 40 and other components.

Referring to FIG. 7 and FIG. 8, according to some embodiments of the present application, the first groove side surface 511 and the second groove side surface 512 are provided oppositely in a second direction Y, and the second direction Y intersects the first direction X.

In the drawings, the direction indicated by the letter Y is the second direction.

The second direction Y intersects the first direction X, and the angle between the second direction Y and the first direction X is adjusted according to different needs.

Optionally, the second direction Y is perpendicular to the first direction X, and in the drawings, the direction indicated by the letter Y is the second direction.

The first groove side surface 511 and the second groove side surface 512 may be planes perpendicular to the second direction Y, and the first groove side surface 511 and the second groove side surface 512 limit the movement of the connection member 40 in the second direction Y, so that the connection member 40 is stably connected to the first battery cell group 201 and the second battery cell group 202, reducing the risk of damage of the joint of the connection member 40 and the first battery cell group 201 and the joint of the connection member 40 and the second battery cell group 202.

Referring to FIG. 4 and FIG. 6, according to some embodiments of the present application, the fixed base 50 includes a second installation groove 52, the second installation groove 52 includes a third groove side surface 521 and a fourth groove side surface 522 arranged oppositely in the first direction X, and at least a part of the separation beam 30 is sandwiched between the third groove side surface 521 and the fourth groove side surface 522.

The second installation groove 52 is a groove of the fixed base 50 for accommodating the separation beam 30, and a part of the separation beam 30 may be located in the second installation groove 52, or the entire separation beam 30 may be located in the second installation groove 52.

The third groove side surface 521 and the fourth groove side surface 522 are two surfaces that constitute the second installation groove 52. The third groove side surface 521 and the fourth groove side surface 522 are arranged oppositely in the first direction X. The third groove side surface 521 and the fourth groove side surface 522 may be planes perpendicular to the first direction X.

When the separation beam 30 is accommodated in the second installation groove 52, the third groove side surface 521 and the fourth groove side surface 522 respectively have a larger contact area with the separation beam 30, and the third groove side surface 521 and the fourth groove side surface 522 apply force to the separation beam 30 respectively, so that the part of the separation beam 30 located between the third groove side surface 521 and the fourth groove side surface 522 is clamped by the third groove side surface 521 and the fourth groove side surface 522.

In the above solution, the second installation groove 52 is used to accommodate the separation beam 30, and at least a part of the separation beam 30 is clamped by the third groove side surface 521 and the fourth groove side surface 522, to facilitate the assembly of the fixed base 50 and the separation beam 30, so that the fixed base 50 is connected stably to the separation beam 30.

According to some embodiments of the present application, the second installation groove 52 further includes a second groove bottom surface (not shown in the drawings), and the second groove bottom surface is fitted with the separation beam 30.

According to some embodiments of the present application, the inner surface of the second installation groove 52 is bonded to the outer surface of the separation beam 30.

The inner surface of the second installation groove 52 refers to the surface surrounding the second installation groove 52. The third groove side surface 521, the fourth groove side surface 522 and the second groove bottom surface are all the inner surfaces of the second installation groove 52.

In the above solution, the inner surface of the second installation groove 52 is bonded to the outer surface of the separation beam 30, so that the fixed base 50 is firmly connected to the separation beam 30, reducing the risk of the fixed base 50 moving relative to the separation beam 30.

Referring to FIG. 3, according to some embodiments of the present application, the box 10 includes a box bottom wall 111 and a box side wall 112. The box side wall 112 surrounds the box bottom wall 111. The separation beam 30 is provided on the box bottom wall 111. The separation beam 30 extends in the second direction Y. Any two of the second direction Y, the first direction X and the thickness direction of the box bottom wall 111 intersects each other.

Any two of the second direction Y, the first direction X and the thickness direction of the box bottom wall 111 may intersect each other in various forms. For example, the second direction Y may be perpendicular to the first direction X, and the second direction Y and the first direction X may not be perpendicular to the thickness direction of the box bottom wall 111; alternatively, the second direction Y may be perpendicular to the thickness direction of the box bottom wall 111, and the second direction Y and the thickness direction of the box bottom wall 111 may not be perpendicular to the first direction X; alternatively, the first direction X may be perpendicular to the thickness direction of the box bottom wall 111, and the first direction X and the thickness direction of the box bottom wall 111 may not be perpendicular to the second direction Y; alternatively, any two of the second direction Y, the first direction X and the thickness direction of the box bottom wall 111 are perpendicular to each other.

Optionally, any two of the second direction Y, the first direction X and the thickness direction of the box bottom wall 111 are perpendicular to each other, and in the drawings, the direction indicated by the letter Y is the second direction, and the direction indicated by the letter Z is the thickness direction of the box bottom wall 111.

The box side wall 112 may be disposed at the edge of the box bottom wall 111, so that the space defined by the box side wall 112 and the box bottom wall 111 has a larger capacity.

The box side wall 112 and the box bottom wall 111 may be connected in various ways. For example, the box side wall 112 and the box bottom wall 111 may be integrally formed. For example, the box side wall 112 and the box bottom wall 111 are formed by extruding an aluminum product; or, the box side wall 112 and the box bottom wall 111 may be provided separately and welded to each other.

The separation beam 30 is disposed on the box bottom wall 111, and the separation beam 30 may be welded to the box bottom wall 111 to enable stable connection between the separation beam 30 and the box bottom wall 111. When the separation beam 30 is welded with the box bottom wall 111, the separation beam 30 may be made of the same material as the box bottom wall 111 to facilitate the welding of the separation beam 30 and the box bottom wall 111.

The separation beam 30 extends in the second direction Y. The size of the separation beam 30 in the second direction Y is larger than the sizes of the separation beam 30 in other directions. The length direction of the separation beam 30 may be parallel to the second direction Y; and the thickness direction of the separation beam 30 may be parallel to the first direction X.

The two opposite ends of the separation beam 30 in the second direction Y may be connected to the box side wall 112 respectively, so that the connection area between the separation beam 30 and the box 10 is larger, and the connection between the separation beam 30 and the box 10 is stable. Two ends of the separation beam 30 may be welded to the box side wall 112, so that the separation beam 30 is connected with the box side wall 112 firmly, improving the overall strength of the box 10.

In the above solution, the separation beam 30 is disposed on the box bottom wall 111 to facilitate the connection between the separation beam 30 and the box 10, and the separation beam 30 extends in the second direction Y, so that the separation beam 30 has a larger shielding area for the first battery cell group 201 and the second battery cell group 202, facilitating the separation beam 30 separating the first battery cell group 201 from the second battery cell group 202, and thereby reducing the risk of short circuit caused by contact between the first battery cell group 201 and the second battery cell group 202.

Referring to FIG. 3 and FIG. 4, according to some embodiments of the present application, the separation beam 30 includes a top surface 31 away from the box bottom wall 111, the separation beam 30 is provided with a first concave part 32 recessed from the top surface 31 toward the box bottom wall 111, and at least part of the fixed base 50 is provided in the first concave part 32.

The separation beam 30 further includes a bottom surface (not shown in the drawings) facing the box bottom wall 111, and the bottom surface and the top surface 31 are oppositely arranged in the thickness direction of the box bottom wall 111. The bottom surface may be in contact with the box bottom wall 111, so that the box bottom wall 111 has a better supporting effect on the separation beam 30.

The first concave part 32 is a region of the separation beam 30 formed by the top surface 31 being recessed toward the box bottom wall 111. The contour of the first concave part 32 is similar to the contour of the fixed base 50, so that at least a part of the fixed base 50 can be accommodated in the first concave part 32.

The assembly method of the fixed base 50 and the first concave part 32 may be selected according to the actual situation. For example, a part of the fixed base 50 may be disposed in the first concave part 32, or the entire fixed base 50 may be disposed in the first concave part 32.

When the fixed base 50 is disposed in the first concave part 32, the fixed base 50 is in contact with the bottom surface of first concave part 32, to make the fixed base 50 be supported by the separation beam 30. For example, the first groove bottom surface 514 of the fixed base 50 is in contact with the bottom surface of the first concave part 32.

In the above solution, the first concave part 32 provides a space for accommodating the fixed base 50, and at least part of the fixed base 50 is provided in the first concave part 32, which can reduce the space occupied by the fixed base 50 in the thickness direction of the box bottom wall 111 after being assembled with the separation beam 30, reduce the effect of the fixed base 50 on the space utilization rate inside the box 10, and enable the battery 100 to have a higher energy density.

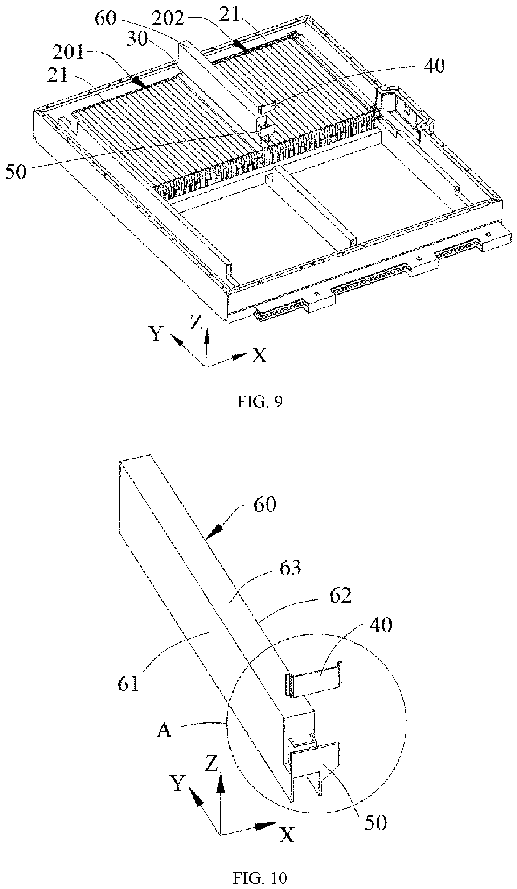

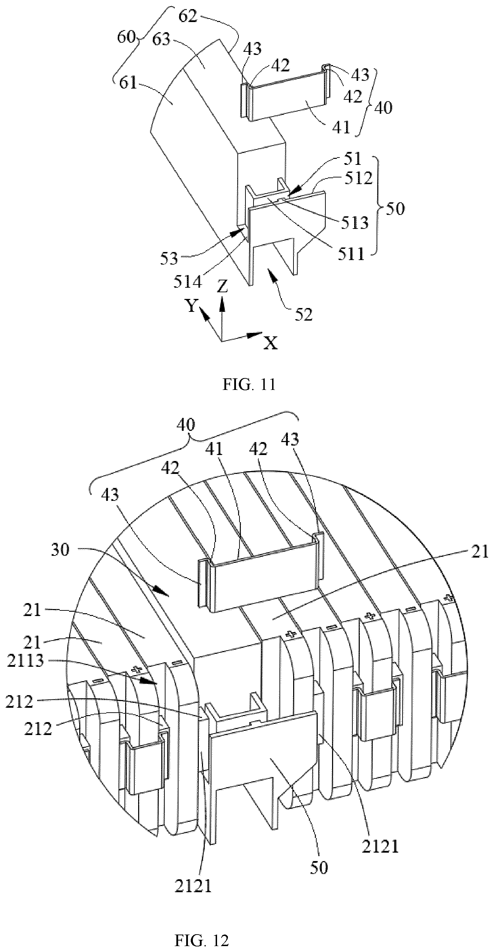

Referring to FIG. 9 to FIG. 11, FIG. 9 is a partial structural schematic diagram of a battery provided by some embodiments of the present application; FIG. 10 is a schematic structural diagram of a fixed base, an insulation member and a bus member provided by some embodiments of the present application; and FIG. 11 is a local enlarged view of part A of FIG. 10. According to some embodiments of the present application, the battery 100 further includes an insulation member 60, and the insulation member 60 is connected to the separation beam 30 to isolate the separation beam 30 from the first battery cell group 201 and isolate the separation beam 30 from the second battery cell group 202, and the fixed base 50 is connected to the insulation member 60.

The insulation member 60 is an electrical insulation component and is used to insulate and isolate the separation beam 30 from the first battery cell group 201 and the second battery cell group 202. The material of the insulation member 60 may be plastic.

The insulation member 60 is connected to the separation beam 30, and the insulation member 60 may be bonded to the separation beam 30, so that the insulation member 60 is firmly connected to the separation beam 30. The inner surface of the insulation member 60 may be fitted with the outer surface of the separation beam 30.

The fixed base 50 and the insulation member 60 may be connected in a variety of ways. For example, the fixed base 50 and the insulation member 60 may be integrally injection molded, or the fixed base 50 may be connected to the insulation member 60 by means of snap-fitting, bonding, riveting, etc., or the fixed base 50 may be connected, by melting, with the insulation member 60.

In the above solution, the insulation member 60 is connected to the separation beam 30, and the insulation member 60 and the separation beam 30 have a large connection area, thereby facilitating the isolation of the first battery cell group 201 and the second battery cell group 202, and reducing the risk of short circuit caused by contact between the first battery cell group 201 and the second battery cell group 202.

Referring to FIG. 9 to FIG. 11, according to some embodiments of the present application, the insulation member 60 includes a first side wall 61 and a second side wall 62, and the first side wall 61 and the second side wall 62 are respectively provided at two sides of the separation beam 30 in the first direction X.

The first side wall 61 and the second side wall 62 are constitution parts of the insulation member 60, and the first side wall 61 and the second wall define a space for accommodating the separation beam 30.

Optionally, at least a part of the separation beam 30 is sandwiched between the first side wall 61 and the second side wall 62.

In the above solution, the first side wall 61 and the second side wall 62 are respectively provided at two sides of the separation beam 30 in the first direction X, which facilitates the assembly of the insulation member 60 and the separation beam 30, and enables better insulation effect between the first battery cell group 201 and the second battery cell group 202.

Referring to FIG. 9 to FIG. 11, according to some embodiments of the present application, the insulation member 60 further includes a connection wall 63, wherein the connection wall 63 is provided at the side of the separation beam 30 away from the box bottom wall 111, and the connection wall 63 connects the first side wall 61 and the second side wall 62.

The first side wall 61, the second side wall 62 and the connection wall 63 may be connected to form a U-shaped structure.

The third wall is disposed at one side of the separation beam 30 away from the box bottom wall 111, so that the insulation member 60 has an opening facing the box bottom wall 111, and the separation beam 30 enters, from the opening, the space defined by the first wall, the second wall and the third wall.

In the above solution, the connection wall 63 connects the first side wall 61 and the second side wall 62, increasing the strength of the insulation member 60 and facilitating the connection between the insulation member 60 and the separation beam 30.

According to some embodiments of the present application, the fixed base 50 and the insulation member 60 are integrally formed.

In the above solution, the fixed base 50 and the insulation member 60 are integrally injection molded, so that the fixed base 50 is connected firmly to the insulation member 60, facilitating processing and manufacturing.

Referring to FIG. 10 and FIG. 11, according to some embodiments of the present application, the fixed base 50 is located at one end of the insulation member 60 in the second direction Y.

In the above solution, the fixed base 50 and the insulation member 60 are arranged in the second direction Y, and the arrangement direction of the fixed base 50 and the insulation member 60 is parallel to the extension direction of the separation beam 30. On the one hand, it is convenient for each of the fixed base 50 and the insulation member 60 to have a larger connection area with the separation beam 30, and on the other hand, it reasonably utilizes the space in the extension direction of the separation beam 30 to improve the space utilization rate in the box 10, enabling the battery 100 to have a higher energy density.

Referring to FIG. 3, according to some embodiments of the present application, both the first battery cell group 201 and the second battery cell group 202 include a plurality of battery cells 21 stacked in the first direction X.

In the above solution, the plurality of battery cells 21 in the first battery cell group 201 and the second battery cell group 202 are stacked in the first direction X, so as to on the one hand, facilitate realizing the electrical connection between the first battery cell group 201 and the second battery cell group 202, and on the other hand, enable higher space utilization rate of the box 10 in the first direction X.

The structure of the battery cells 21 in the first battery cell group 201 is the same as the structure of the battery cells 21 in the second battery cell group 202. For convenience of description, the battery cell 21 in the present application is collective name of the battery cell 21 in the first battery cell group 201 and the battery cell 21 in the second battery cell group 202.

Referring to FIG. 8 and further FIG. 12, FIG. 12 is a partial structural schematic diagram of a battery provided by some embodiments of the present application. According to some embodiments of the present application, the battery cell 21 includes a housing 211 and an electrode terminal 212. The housing 211 has a first wall 2111 perpendicular to the first direction X, the electrode terminal 212 is installed on the first wall 2111, the electrode terminal 212 has a first surface 2121, and the plane where the first surface 2121 is located intersects the first wall 2111. One end of the connection member 40 is connected to the first surface 2121 of the electrode terminal 212 of one battery cell 21 in the first battery cell group 201 closest to the separation beam 30, and the other end of the connection member 40 is connected to the first surface 2121 of the electrode terminal 212 of one battery cell 21 in the second battery cell group 202 closest to the separation beam 30.

The housing 211 includes a casing and a cover body. The casing has an opening and the cover body closes the opening to isolate the internal environment of the battery cell 21 from the external environment.

The casing is a component used to cooperate with the cover body to form an internal environment of the battery cell 21, wherein the formed internal environment may be used to accommodate an electrode assembly, an electrolytic solution, and other components. The casing and the cover body may be separate components. The casing may be in various shapes and of various sizes. Specifically, the shape of the casing may be determined by the specific shape and size of the electrode assembly. The casing may be made of a variety of materials, such as copper, iron, aluminum, stainless steel, aluminum alloy, plastic, etc., which is not specially defined in the embodiment of the present application. The embodiments of the present application are introduced by taking the casing in a rectangular parallelepiped shape as an example.

The cover body refers to a component that covers the opening of the casing to isolate the internal environment of the battery cell 21 from the external environment. Without limitation, the shape of the cover body may be adapted to the shape of the casing to fit the casing. Optionally, the cover body may be made of a material with a certain hardness and strength (such as aluminum alloy). In this way, the cover body is less likely to deform when subjected to extrusion and collision, enabling the battery cell 21 to have higher structural strength and also improved safety performance. Functional components such as electrode terminal 212 may be provided on the cover body. The electrode terminal 212 may be used to be electrically connected with the electrode assembly for outputting or inputting electric energy of the battery cell 21. The cover body may also be made of a variety of materials, such as copper, iron, aluminum, stainless steel, aluminum alloy, plastic, etc., which is not specially defined in the embodiment of the present application. In some embodiments, the inner side of the cover body may be further provided with an insulation structure, and the insulation structure may be used to isolate the electrical connection part in the casing from the cover body to reduce the risk of short circuit. Exemplarily, the insulation structure may be plastic, rubber, etc.

The battery cell 21 further includes at least one electrode assembly, which is a component in the battery cell 21 where electrochemical reactions occur. One or more electrode assemblies may be contained within the casing. The electrode assembly may be formed by winding or laminating a positive electrode plate and a negative electrode plate, and generally, a separator is provided between the positive electrode plate and the negative electrode plate. The separator is used for separating the positive electrode plate from the negative electrode plate to avoid short circuit caused by the internal connection between the positive electrode plate and the negative electrode plate. The portions of the positive electrode plate and the negative electrode plate that contain active material constitute the main body of the cell assembly, and the portions of the positive electrode plate and the negative electrode plate that do not contain active material constitute respective tabs. The positive electrode tab and the negative electrode tab may be located together at one end of the main body or respectively located at two ends of the main body. During the charging and discharging processes of the battery 100, the positive active material and the negative active material react with the electrolytic solution, and the tabs are connected to the electrode terminals 212 to form a current loop.

The first wall 2111 is a wall of the housing 211 perpendicular to the first direction X. The first wall 2111 may be the cover body, or the first wall 2111 may also be a wall of the casing. Optionally, the first wall 2111 is the cover body, facilitating the assembly of the electrode terminal 212 and the first wall 2111.

The electrode terminal 212 is installed on the first wall 2111. The electrode terminal 212 has a first surface 2121 and a first end surface. The first end surface is the surface of the electrode terminal 212 facing away from the first wall 2111. The plane where the first surface 2121 is located intersects the first wall 2111 and the first end surface.

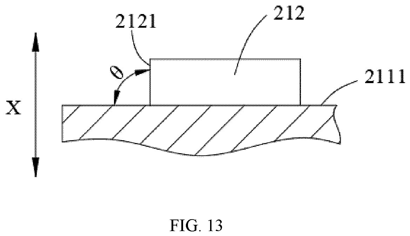

Referring to FIG. 13, FIG. 13 is a schematic diagram showing cooperation between an electrode terminal and a first wall provided by some embodiments of the present application. That the plane where the first surface 2121 is located intersects the first wall 2111 may be that the plane where the first surface 2121 is located is parallel to the thickness direction of the first wall 2111, or the plane where the first surface 2121 is located is obliquely provided relative to the thickness direction of the first wall 2111. For example, the angle θ between the plane where the first surface 2121 is located and the first wall 2111 is 60°~120°; preferably, the angle θ between the plane where the first surface 2121 is located and the first wall 2111 is 85°~95°; preferably, the plane where the first surface 2121 is located may be perpendicular to the first wall 2111, that is, the plane where the first surface 2121 is located may be parallel to the thickness direction of the first wall 2111, so that the first surface 2121 is connected with the connection member 40.

The first surface 2121 may be welded to the connection member 40, so that the connection member 40 is firmly connected to the electrode terminal 212.

In the above solution, the electrode terminal 212 is provided on the first wall 2111 of the housing 211 perpendicular to the first direction X, so as to facilitate the connection between the plurality of battery cells 21, and the connection of the connection member 40 with the first battery cell group 201 and the second battery cell group 202.

Referring to FIG. 8, FIG. 11 and FIG. 12, according to some embodiments of the present application, the connection member 40 includes a base wall 41, two end walls 42 and two flanging parts 43. The two end walls 42 are arranged oppositely in the first direction X. The base wall 41 connects the two end walls 42. Each flanging part 43 extends from one end of the corresponding end wall 42 away from the base wall 41 in a direction away from the other end wall 42, and one of the flanging parts 43 is connected to the first surface 2121 of the electrode terminal 212 of the battery cell 21 in the first battery cell group 201 closest to the separation beam 30, and the other flanging part 43 is connected to the first surface 2121 of the electrode terminal 212 of the battery cell 21 in the second battery cell group 202 closest to the separation beam 30.

The two ends of the base wall 41 in the first direction X are connected to the two end walls 42 respectively, and the two end walls 42 and the two flanging parts 43 are provided correspondingly.

Each flanging part 43 extends from one end of the corresponding end wall 42 away from the base wall 41 in a direction away from the other end, so that the flanging part 43 is connected with the first surface 2121 of the electrode terminal 212 of the corresponding battery cell 21.

The base wall 41, the two end walls 42 and the two flanging parts 43 may be integrally formed, for example, stamping formed.

The connection member 40 may be in a bent structure, the end wall 42 is bent relative to the base wall 41, and the flanging part 43 is bent relative to the end wall 42.

In the above solution, the structural form of the connection member 40 makes the connection member 40 have high strength, and the flanging part 43 is connected to the first surface 2121 of the electrode terminal 212, which can reduce the space occupied in the first direction X and improve the space utilization rate of the box 10 in the first direction X.

Referring to FIG. 8, FIG. 11 and FIG. 12, according to some embodiments of the present application, the fixed base 50 includes a first installation groove 51, the first installation groove 51 includes a first groove side surface 511 and a second groove side surface 512 arranged oppositely, and the base wall 41 is sandwiched between the first groove side surface 511 and the second groove side surface 522.

The first installation groove 51 is a groove of the fixed base 50 for accommodating the base wall 41. At least a part of the base wall 41 is sandwiched between the first groove side surface 511 and the second groove side surface 512.

In the above solution, the base wall 41 is sandwiched between the first groove side surface 511 and the second groove side surface 512, such that the movement of the base wall 41 is limited by the first groove side surface 511 and the second groove side surface 512, thus enabling reliable connection of the connection member 40 with the first battery cell group 201 and the second battery cell group 202.

Referring to FIG. 8, according to some embodiments of the present application, the base wall 41 includes a second surface 411 and a third surface 412 disposed oppositely, two end walls 42 protrude out from the second surface 411, the first groove side surface 511 is provided opposite to the second surface 411, and the second groove side surface 512 is provided opposite to the third surface 412. The dimension of the projection of the first groove side surface 511 on the second surface 411 in the first direction X is L1, and the dimension of the projection of the second groove side surface 512 on the third surface 412 in the first direction X is L2, satisfying: L1 < L2.

The second surface 411 and the third surface 412 are arranged oppositely in the thickness direction of the base wall 41, and the thickness direction of the base wall 41 intersects the first direction X. Optionally, the thickness direction of the base wall 41 may be perpendicular to the first direction X.

The first groove side surface 511 is arranged opposite to the second surface 411, and the first groove side 511 may be parallel to the second surface 411. The second groove side surface 512 is arranged opposite to the third surface 412, and the second groove side 512 may be parallel to the third surface 412.

The projection of the first groove side surface 511 on the second surface 411 refers to the projection of the first groove side surface 511 on the second surface 411 in the thickness direction of the base wall 41. Similarly, the projection of the second groove side surface 512 on the third surface 412 refers to the projection of the second groove side surface 512 on the second surface 411 in the thickness direction of the base wall 41.

When the first groove side surface 511 and the second groove side surface 512 clamp the base wall 41, the first groove side surface 511 may be fitted with the second surface 411, and the second groove side surface 512 may be fitted with the third surface 412. At this time, the projection of the first groove side surface 511 on the second surface 411 may be the overlapping area of the first groove side surface 511 and the second surface 411, and the projection of the second groove side surface 512 on the third surface 412 may be the overlapping area of the second groove side surface 512 and the third surface 412.

In the above solution, since L1 is smaller than L2, the base wall 41 and the second groove side surface 512 have a large overlapping area, so that the fixed base 50 has a better constraining effect on the connection member 40; and at the same time, the two end walls 42 protrude out from the second surface 411, and the first groove side surface 511 is provided opposite to the second surface 411 to reduce the risk of assembly interference between the fixed base 50 and the connection member 40.

Referring to FIG. 8, according to some embodiments of the present application, the first walls 2111 of the battery cells 21 of the first battery cell group 201 are provided facing the separation beam 30, and the first walls 2111 of the battery cells 21 of the second battery cell group 202 are provided facing away from the separation beam 30.

In the above solution, the plurality of battery cells 21 in the first battery cell group 201 are arranged in the same manner as the plurality of battery cells 21 in the second battery cell group 202, which facilitates cooperation between the box 10, and the first battery cell group 201 and the second battery cell 202.

Referring to FIG. 6 and FIG. 8, according to some embodiments of the present application, the fixed base 50 further includes a third installation groove 53, and a part of the electrode terminal 212 of the battery cell 21 of the first battery cell group 201 closest to the separation beam 30 is located in the third installation groove 53.

The third installation groove 53 may be formed from a surface of the fixed base 50 facing the first battery cell group 201 being recessed toward the second battery cell group 202 in the first direction X. Since the first wall 2111 of the first battery cell group 201 is disposed facing the separation beam 30, the electrode terminal 212 of the battery cell 21 of the first battery cell group 201 closest to the separation beam 30 protrudes toward the separation beam 30, and a part of the protruding portion of the electrode terminal 212 may be accommodated in the third mounting groove 53.

In the above solution, a part of the electrode terminal 212 of the battery cell 21 of the first battery cell group 202 closest to the separation beam 30 is located in the third installation groove 53, reducing the space occupied in the first direction X by the structure after the connection member 40 is connected to the electrode terminal 212, reasonably utilizing the internal space of the box 10, and enabling the battery 100 to have higher energy density.

According to some embodiments of the present application, the housing 211 includes a first wall 21111 and a second wall 2112 oppositely provided in a first direction X, a third wall and a fourth wall oppositely provided in a second direction Y, and a fifth wall and a sixth wall oppositely provided in a third direction. The area of the third wall and the area of the fourth wall are both smaller than the area of the first wall 2111, the area of the third wall and the area of the fourth wall are both smaller than the area of the second wall 2112, the areas of the fifth wall and the sixth wall are both smaller than the area of the first wall 2111, the areas of the fifth wall and the sixth wall are both smaller than the area of the second wall 2112, and any two of the first direction, the second direction and the third direction intersect each other.

Any two of the third direction, the second direction Y, and the first direction X may intersect each other in various forms. For example, the third direction may be perpendicular to the second direction Y, and the third direction and the second direction Y may not be perpendicular to the first direction X; or, the third direction may be perpendicular to the first direction X, and the third direction and the first direction X may not be perpendicular to the second direction Y; or, the second direction Y may be perpendicular to the first direction X, and the second direction Y and the first direction X may not be perpendicular to the third direction; or any two of the third direction, the second direction Y and the first direction X are perpendicular to each other. Optionally, any two of the third direction, the second direction Y and the first direction X are perpendicular to each other.

The first wall 2111, the second wall 2112, the third wall, the fourth wall, the fifth wall and the sixth wall are walls that constitute the housing 211, and these walls may enclose a space for accommodating the electrode assembly.

In the above solution, the first wall 2111 and the second wall 2112 are walls of the housing 211 with larger areas, and the plurality of battery cells 21 are stacked in the first direction X perpendicular to the first wall 2111, so that the first battery cell group 201 and the second battery cell group 202 have compact structures, enabling the battery 100 to have higher energy density.

Referring to FIG. 8 and FIG. 12, according to some embodiments of the present application, the housing 211 further has a second wall 2112 disposed opposite to the first wall 2111, wherein a first region of an edge of the second wall 2112 is recessed to form a second concave part 2113, and the second concave part 2113 is used to accommodate the electrode terminal 212 of the battery cell 21 adjacent to the second wall 2112.

The second wall 2112 and the first wall 2111 are arranged oppositely in the first direction X. The first region is a region of the edge of the second wall 2112. In the first direction X, the first region corresponds to the region of the first wall 2111 where the electrode terminal 212 is installed. The first region is recessed in the first direction X, toward the first wall 2111 to form a second concave part 2113.

In some embodiments, the recessing depth of the second concave part 2113 is greater than the height of the electrode terminal 212 protruding from the first wall 2111. It can be understood that it is also possible that only a part of the electrode terminal 212 of the battery cell 21 adjacent to the second wall 2112 is accommodated in the second concave part 2113.

The surface of the second wall 2112 may be provided with an insulation structure, so that when multiple battery cells 21 are stacked, the second wall 2112 is insulated and isolated from the electrode terminals 212 of adjacent battery cells 21. The insulation structure may also be provided on the surface of the electrode terminal 212 away from the first wall 2111, so that when multiple battery cells 21 are stacked, the electrode terminal 212 may be connected to the first wall 2111.

In the above solution, the arrangement of the second concave part 2113 can accommodate the electrode terminal 212 of the battery cell 21 adjacent to the second wall 2112, making the battery cell group have compact structure and thus enabling the battery 100 to have higher energy density.

According to some embodiments of the present application, the present application further provides an electrical device, including at least one battery 100 provided in any of the above embodiments. The battery 100 is used to provide electric energy.

The electrical device may be any of the aforementioned devices or systems using the battery 100.

According to some embodiments of the present application, referring to FIG. 3 to FIG. 13, the present application provides a battery 100. The battery 100 includes a box 10, a first battery cell group 201, a second battery cell group 202, a separation beam 30, a connection member 40, a fixed base 50, and an insulation member 60.

The box 10 is in a rectangular parallelepiped shape. The box 10 includes a first sub-box 11 and a second sub-box 12. The first sub-box 11 includes a box bottom wall 111 and a box side wall 112. The box side wall 112 surrounds the box bottom wall 111, and the thickness direction of the box bottom wall 111 is perpendicular to the first direction X. The second sub-box 12 is disposed at one side of the box side wall 112 away from the box bottom wall 111, and the first sub-box 11 and the second sub-box 12 are combined/buckled to form an accommodation space. The first battery cell group 201, the second battery cell group 202, and the separation beam 30 are all arranged in the accommodation space.

The separation beam 30 is disposed on the bottom wall, the separation beam 30 extends in the second direction Y, and two ends of the separation beam 30 are connected with the box side wall 112 respectively. The separation beam 30 includes a top surface 31 away from the box bottom wall 111, and the separation beam 30 is provided with a first concave part 32 recessed from the top surface 31 toward the bottom wall.

The first battery cell group 201 and the second battery cell group 202 are provided at two sides of the separation beam 30 in the first direction X, and both the first battery cell group 201 and the second battery cell group 202 include a plurality of battery cells 21 stacked in the first direction X. Each battery cell 21 includes a housing 211 and an electrode terminal 212. The housing 211 includes a first wall 2111 perpendicular to the first direction X, the electrode terminal 212 is installed on the first wall 2111. The electrode terminal 212 has a first surface 2121, and the plane where the first surface 2121 is located intersects the first wall 2111. The first walls 2111 of the battery cells 21 of the first battery cell group 201 are provided facing the separation beam 30, and the first walls 2111 of the battery cells 21 of the second battery cell group 202 are provided facing away from the separation beam 30.

The connection member 40 is used to realize electrical connection between the first battery cell group 201 and the second battery cell group 202. The connection member 40 includes a base wall 41, two end walls 42 and two flanging parts 43. The two end walls 42 are arranged oppositely in the first direction X. The base wall 41 connects the two end walls 42. Each flanging part 43 extends from one end of the corresponding end wall 42 away from the base wall 41, in a direction away from the other end wall 42, and one of the flanging parts 43 is connected to the first surface 2121 of the electrode terminal 212 of the battery cell 21 in the first battery cell group 201 closest to the separation beam 30, and the other flanging part 43 is connected to the first surface 2121 of the electrode terminal 212 of the battery cell 21 in the second battery cell group 202 closest to the separation beam 30.

The fixed base 50 includes a first installation groove 51, a second installation groove 52 and a third installation groove 53. The first installation groove 51 includes oppositely provided first groove side surface 511 and second groove side surface 512, and a first groove bottom surface 514. The base wall 41 is sandwiched between the first groove side surface 511 and the second groove side surface 512, and the first groove bottom surface 514 supports the base wall 41; the second installation groove 52 includes a third groove side surface 521 and a fourth groove side 522 oppositely provided in the first direction X. At least a part of the separation beam 30 is sandwiched between the third groove side surface 521 and the fourth groove side surface 522, the third groove side surface 521 and the fourth groove side surface 522 are bonded to the separation beam 30; and the part of the electrode terminal 212 of the battery cell 21 in the first battery cell group 201 closest to the separation beam 30 is located in the third mounting groove 53.

The insulation member 60 and the fixed base 50 are integrally formed, and the fixed base 50 is located at one end of the insulation member 60 in the second direction Y. The insulation member 60 includes a first side wall 61, a second side wall 62 and a connection wall, and the first side wall 61 and the second side wall 62 are respectively provided at two sides of the separation beam 30 in the first direction X, the connection wall 63 is provided at the side of the separation beam 30 away from the box bottom wall 111, and the connection wall 63 connects the first side wall 61 and the second side wall 62. The inner surface of the insulation member 60 is bonded to the outer surface of the separation beam 30.

In the battery 100 according to the embodiments of the present application, a part of the fixed base 50 is installed in the first concave part 32 of the separation beam 30, and the first battery cell group 201 and the second battery cell group 202 located at two sides of the separation beam 30 are electrically connected through a connection member 40. The connection member 40 is fixed to the first installation groove 51 of the fixed base 50. The first groove side surface 511 and the second groove side surface 512 of the first installation groove 51 clamp the connection member 40, so that the movement of the connection member 40 is constrained by the fixed base 50, improving the connection reliability between the connection member 40 and the battery cell group, and reducing the risk of damage of the joint of the connection member 40 and the battery cell group caused by the movement of the connection member 40, thereby enabling the battery 100 to have higher safety.

Although the present application has been described with reference to preferred embodiments, various modifications may be made and equivalents may be substituted for components thereof without departing from the scope of the present application. In particular, as long as there is no structural conflict, the technical features mentioned in the various embodiments can be combined in any way. This application is not limited to the specific embodiments disclosed herein, but includes all technical solutions falling within the scope of the claims.

## Claims

1. A battery, comprising:
a box;
a first battery cell group and a second battery cell group, which are provided in the box and arranged in a first direction;
a separation beam, provided between the first battery cell group and the second battery cell group;
a connection member, wherein the first battery cell group and the second battery cell group are electrically connected by the connection member; and
a fixed seat, provided on the separation beam,
wherein the connection member is fixed to the fixed base.

2. The battery according to claim 1, wherein the fixed base comprises a first installation groove, and a part of the connection member is provided in the first installation groove.

3. The battery according to claim 2, wherein the first installation groove comprises a first groove side surface and a second groove side surface arranged oppositely, and a part of the connection member is sandwiched between the first groove side surface and the second groove side surface.

4. The battery according to claim 3, wherein at least one of the first groove side surface and the second groove side surface is provided with a protrusion, and the protrusion abuts against the connection member.

5. The battery according to claim 3 or 4, wherein the first installation groove further comprises a first groove bottom surface, the first groove bottom surface is connected with the first groove side surface and the second groove side surface, and the first groove bottom surface supports the connection member.

6. The battery according to claim 5, wherein in a direction away from the first groove bottom surface, the connection member does not exceed an end of the first groove side surface away from the first groove bottom surface, and/or the connection member does not exceed an end of the second groove side surface away from the first groove bottom surface.

7. The battery according to any one of claims 3-6, wherein the first groove side surface and the second groove side surface are provided oppositely in a second direction, and the second direction intersects the first direction.

8. The battery according to any one of claims 1-7, wherein the fixed base comprises a second installation groove, the second installation groove comprises a third groove side surface and a fourth groove side surface arranged oppositely in the first direction, and at least a part of the separation beam is sandwiched between the third groove side surface and the fourth groove side surface.

9. The battery according to claim 8, wherein an inner surface of the second installation groove is bonded to an outer surface of the separation beam.

10. The battery according to any one of claims 1-9, wherein the box comprises a box bottom wall and a box side wall, the box side wall surrounds the box bottom wall, the separation beam is provided on the box bottom wall, the separation beam extends in the second direction, and the second direction intersects the first direction.

11. The battery according to claim 10, wherein the separation beam comprises a top surface away from the box bottom wall, the separation beam is provided with a first concave part recessed from the top surface toward the box bottom wall, and at least a part of the fixed base is provided in the first concave part.

12. The battery according to claim 10 or 11, wherein the battery further comprises an insulation member, the insulation member is connected to the separation beam to isolate the separation beam from the first battery cell group and isolate the separation beam from the second battery cell group, and the fixed base is connected to the insulation member.

13. The battery according to claim 12, wherein the insulation member comprises a first side wall and a second side wall, and the first side wall and the second side wall are respectively provided at two sides of the separation beam in the first direction.

14. The battery according to claim 13, wherein the insulation member further comprises a connection wall, which is provided at a side of the separation beam away from the box bottom wall, and the connection wall connects the first side wall and the second side wall.

15. The battery according to any one of claims 12 -14, wherein the fixed base and the insulation member are integrally formed.

16. The battery according to any one of claims 12-15, wherein the fixed base is located at an end of the insulation member in the second direction.

17. The battery according to any one of claims 1-16, wherein each of the first battery cell group and the second battery cell group comprises a plurality of battery cells stacked in the first direction X.

18. The battery according to claim 17, wherein each of the battery cells comprises a housing and an electrode terminal, the housing has a first wall perpendicular to the first direction, the electrode terminal is installed on the first wall, the electrode terminal has a first surface, a plane where the first surface is located intersects the first wall, one end of the connection member is connected to a first surface of an electrode terminal of one battery cell in the first battery cell group closest to the separation beam, and the other end of the connection member is connected to a first surface of an electrode terminal of one battery cell in the second battery cell group closest to the separation beam.

19. The battery according to claim 18, wherein the connection member comprises a base wall, two end walls and two flanging parts, the two end walls are arranged oppositely in the first direction, the base wall connects the two end walls, each of the flanging parts extends from one end of the corresponding end wall away from the base wall in a direction away from the other end wall, and one of the flanging parts is connected to the first surface of the electrode terminal of the battery cell in the first battery cell group closest to the separation beam, and the other flanging part is connected to the first surface of the electrode terminal of the battery cell in the second battery cell group closest to the separation beam.

20. The battery according to claim 19, wherein the fixed base comprises a first installation groove, the first installation groove comprises a first groove side surface and a second groove side surface arranged oppositely, and the base wall is sandwiched between the first groove side surface and the second groove side surface.

21. The battery according to claim 20, wherein the base wall comprises a second surface and a third surface disposed oppositely, two end walls protrude out from the second surface, the first groove side surface is provided opposite to the second surface, and the second groove side surface is provided opposite to the third surface; and
a dimension of a projection of the first groove side surface on the second surface in the first direction is L1, and a dimension of a projection of the second groove side surface on the third surface in the first direction is L2, satisfying: L1 < L2.

22. The battery according to claim 18, wherein the first walls of the battery cells of the first battery cell group are provided facing the separation beam, and the first walls of the battery cells of the second battery cell group are provided facing away from the separation beam.

23. The battery according to claim 22, wherein the fixed base further comprises a third installation groove, and a part of the electrode terminal of the battery cell of the first battery cell group closest to the separation beam is located in the third installation groove.

24. The battery according to any one of claims 18-23, wherein the housing comprises the first wall and a second wall oppositely provided in the first direction, a third wall and a fourth wall oppositely provided in the second direction, and a fifth wall and a sixth wall oppositely provided in a third direction, an area of the third wall and an area of the fourth wall are both smaller than an area of the first wall, the area of the third wall and the area of the fourth wall are both smaller than an area of the second wall, areas of the fifth wall and the sixth wall are both smaller than the area of the first wall, the areas of the fifth wall and the sixth wall are both smaller than the area of the second wall, and any two of the first direction, the second direction and the third direction intersect each other.

25. The battery according to any one of claims 18-24, wherein the housing further has a second wall provided opposite to the first wall, a first region of an edge of the second wall is recessed to form a second concave part, and the second concave part is configured to accommodate the electrode terminal of the battery cell adjacent to the second wall.

26. An electrical device, comprising at least one battery each according to any one of claims 1-25.
